# EUROPÄISCHE PATENTSCHRIFT

(11) **EP 3 996 976 B1**
(45) Veröffentlichungstag und Bekanntmachung des Hinweises auf die Patenterteilung: **23.04.2025**
(21) Anmeldenummer: 20729043.8
(22) Anmeldetag: 27.05.2020
(51) Int. Cl.: B62D 15/02, G01C 21/16, G08G 1/14

(54) **VERFAHREN UND ASSISTENZSYSTEM ZUR NUTZUNG EINER DIGITALEN KARTE IN EINEM FAHRZEUG**
METHOD AND ASSISTANCE SYSTEM FOR USING A DIGITAL MAP IN A VEHICLE
PROCÉDÉ ET DISPOSITIF D'ASSISTANCE POUR L'UTILISATION D'UNE CARTE NUMÉRIQUE DANS UN VÉHICULE

(30) Priorität: 09.09.2019 DE 102019213634
(43) Veröffentlichungstag der Anmeldung: 18.05.2022
(73) Patentinhaber: Volkswagen AG, 38440 Wolfsburg (DE)
(72) Erfinder: WAPPLER, Stefan, 10717 Berlin (DE); SEELAND, Jana, 38448 Wolfsburg (DE)
(86) Internationale Anmeldenummer: PCT/EP2020/064622
(87) Internationale Veröffentlichungsnummer: WO 2021/047800

(56) Entgegenhaltungen:
- DE-A1- 102016 100 730
- US-A1- 2016 265 919

## Beschreibung

Die vorliegende Erfindung betrifft ein Verfahren zur Nutzung einer digitalen Karte in einem Fahrzeug, insbesondere beim Befahren eines Parkraums. Die vorliegende Erfindung betrifft weiterhin ein entsprechendes Assistenzsystem.

Mittlerweile werden in Kraftfahrzeugen eine Vielzahl von Assistenzsystemen eingesetzt. Hierfür werden im Fahrzeug unter anderem Sensoren zur Überwachung des Fahrzeugumfelds, wie beispielsweise eine oder mehrere Videokameras oder Sensoren auf Ultraschall-, Radar- oder Laserbasis, verbaut.

Auch zur Unterstützung des Parkvorgangs existieren verschiedenartige Assistenzsysteme. Weit verbreitet ist die Einparkhilfe, auch unter Park Distance Control (PDC) bekannt, die den näheren Bereich vor und/oder hinter dem Fahrzeug überwacht und den Fahrer mit optischen oder akustischen Signalen auf eventuelle Hindernisse bzw. den verbleibenden Abstand zu diesen Hindernissen hinweist und damit das Ein- und Ausparken erleichtert. Ebenso sind sogenannte Parklenkassistenten im Einsatz, die den Fahrer beim Parkvorgang weiter entlasten. Hierbei werden mittels seitlicher, quer zur Fahrtrichtung ausgerichteter Parksensoren potentielle Parklücken beim Vorbeifahren vermessen. Ist eine Parklücke ausreichend groß, können die beim Einparken nötigen Lenkmanöver dann durch das Fahrzeug automatisch ausgeführt werden, der Fahrer muss dann lediglich Gas- und Bremspedal betätigen. Noch einen Schritt weiter gehen Systeme zum ferngesteuerten Parken, bei denen sich der Fahrer während des Parkvorgangs außerhalb des Fahrzeugs aufhalten kann, was beispielsweise bei engen Parklücken oder einer schmalen Garage von Vorteil sein kann. Hierbei wird der Parkvorgang vom Fahrer nur noch überwacht und kann über eine beispielsweise im Fahrzeugschlüssel integrierte Fernsteuerung gesteuert bzw. abgebrochen werden.

Noch in der Entwicklung befinden sich autonome Parksysteme. So kann bei dem sogenannten trainierten Parken nach einer Trainingsfahrt, bei welcher der Fahrer das Fahrzeug einmal manuell zum Parkplatz gefahren hat, wobei charakteristische Merkmale der Fahrzeugumgebung durch eine Kamera und ggfs. weitere Sensoren erfasst wurden, der Parkplatz automatisch von dem Fahrzeug angesteuert werden.

Ohne ein solches Training sollen sogenannte Parkhauspilot-Systeme auskommen, bei denen das Fahrzeug ohne den Fahrer selbständig in einen Parkraum, wie insbesondere ein Parkhaus, fahren und sich dort eine Parkbucht suchen kann. Dabei kann das Fahrzeug vor dem Befahren des Parkhauses von dem Fahrer an einem Übergabepunkt abgestellt werden. Das Fahrzeug fährt von dort autonom zu der zugewiesenen Parkposition und später auch wieder von dieser zurück zu dem Übergabepunkt, um dort dann wieder von dem Fahrer in Empfang genommen zu werden. Um die hierfür von dem Fahrzeug zurückzulegende Trajektorie ermitteln zu können, müssen dem pilotiert fahrenden Fahrzeug Informationen über die räumlichen Gegebenheiten des Parkhauses, wie die Fahrgassen und Anordnung der einzelnen Parkbuchten auf einer oder auch mehreren Etagen, mit ausreichender Genauigkeit vorliegen. Hierfür sind digitale Kartendaten des Parkhauses sehr hilfreich.

Auch wenn heutige Fahrzeuge überwiegend mit Navigationssystemen ausgestattet sind, liegen in diesen aber üblicherweise keine Karteninformationen über die räumlichen Gegebenheiten innerhalb der Parkhäuser vor. Zwar gibt es Überlegungen, digitale Karten des Parkraums durch einen digitalen Download per IT-Schnittstelle zwischen Fahrzeug und Parkhaus zur Verfügung zu stellen, dieses setzt aber geeignete IT-Schnittstellen auf Seiten des Fahrzeugs und der verschiedenen Parkhausbetreiber voraus.

Vor diesem Hintergrund beschreibt die DE 10 2014 224 073 A1, dass einem Fahrzeug ein Ausschnitt einer digitalen Karte eines Parkplatzes, der vom Fahrzeug auf seiner Fahrt zur Zielposition autonom durchfahren werden soll, über ein Kommunikationsnetzwerk übermittelt wird. Hierfür umfasst ein Server eine Datenbank, in welcher eine digitale Karte eines Parkplatzes gespeichert ist, einen Prozessor, der die Zielposition auf dem Parkplatz und den Ausschnitt aus der digitalen Karte ermittelt, und eine Kommunikationsschnittstelle, die den Ausschnitt der digitalen Karte und die Zielposition über ein Kommunikationsnetzwerk an das Fahrzeug sendet.

Weiterhin offenbart die DE 10 2015 202 482 A1 ein Fahrzeug, das mit Hilfe einer Umfeldsensorik autonom auf einem Parkplatz eine geeignete freie Parkposition als Zielposition sucht und in die freie Parkposition einparkt. Hierbei werden Signalgeber an möglichen Parkpositionen detektiert und ein von dem jeweiligen Signalgeber ausgesandtes Signal dahingehend ausgewertet, ob dieses ein Frei- oder ein Belegtsignal ist. Dieses kann ohne Verwendung einer digitalen Karte oder auch mit Hilfe einer digitalen Karte erfolgen, die dem Fahrzeug im Vorfeld durch einen Kartendienst zur Verfügung gestellt werden kann.

Schließlich offenbart die US 2016/265919 A1 ein Verfahren zur Ermittlung der absoluten Position eines Kraftfahrzeugs. Mit einer Kamera zur Erfassung des Umfelds werden Marker, welchen jeweils eine aus einem Kartendatensatz abrufbare absolute Position zugeordnet ist, erfasst und mittels eines Bildverarbeitungsalgorithmus detektiert und identifiziert. Es wird eine absolute Position des Kraftfahrzeugs in Abhängigkeit von der relativen Position zu einem Marker und der absoluten Position des Markers ermittelt. Auf diese Weise können Kraftfahrzeuge zu einem freien Parkplatz eines Parkhauses geleitet werden. Hierfür ist im Einfahrtsbereich des Parkhauses eine Tafel mit einem zweidimensionalen Strichcode versehen, in dem der Kartendatensatz eincodiert ist, so dass durch Erfassung mit der Kamera des Kraftfahrzeugs eine Übermittlung des Kartendatensatzes ohne Funkübertragung möglich ist. Hierbei kann der Kartendatensatz auch eine komplette Karte mit Wänden und sonstigen Sichthindernisse enthalten, so dass festgestellt werden kann, ob von der zuletzt ermittelten Position zu dem Marker eine Sichtlinie zu dem Marker besteht oder ob ein optisches Hindernis im Weg ist. US 2016/265919 A1 offenbart insbesondere ein Verfahren zur Nutzung einer digitalen Karte in einem Fahrzeug, wobei- Bilddaten des Fahrzeugumfelds mit einer oder mehreren Kameras des Fahrzeugs erfasst werden;- die erfassten Bilddaten zur Erkennung einer visuell dargestellten Übersichtskarte, die eine abstrahierte Abbildung von räumlichen Gegebenheiten in der Nähe der Übersichtskarte enthält, verarbeitet werden;- die Bilddaten einer erkannten Übersichtskarte in eine navigierbare digitale Karte transformiert werden; und- unter Verwendung der digitalen Karte eine Leitinformation für eine Fahrtroute in dem in der Übersichtskarte dargestellten räumlichen Bereich erzeugt wird.

Es ist eine Aufgabe der Erfindung, ein Verfahren zur Nutzung einer digitalen Karte in einem Fahrzeug, sowie ein entsprechendes Assistenzsystem zur Verfügung zu stellen, dass insbesondere für das automatische Befahren eines Parkraums genutzt werden kann.

Diese Aufgabe wird durch ein Verfahren mit den Merkmalen des Anspruchs 1 sowie durch ein Assistenzsystem gemäß Anspruch 9 gelöst. Bevorzugte Ausgestaltungen der Erfindung sind Gegenstand der abhängigen Ansprüche.

Bei dem erfindungsgemäßen Verfahren zur Nutzung einer digitalen Karte in einem Fahrzeug werden Bilddaten des Fahrzeugumfelds mit einer oder mehreren Kameras des Fahrzeugs erfasst. Die erfassten Bilddaten werden zur Erkennung einer visuell dargestellten Übersichtskarte, die eine abstrahierte Abbildung von räumlichen Gegebenheiten in der Nähe der Übersichtskarte enthält, verarbeitet. Die Bilddaten einer erkannten Übersichtskarte werden in eine navigierbare digitale Karte transformiert. Unter Verwendung der digitalen Karte wird eine Leitinformation für eine Fahrtroute in dem in der Übersichtskarte dargestellten räumlichen Bereich erzeugt.

Diese Leitinformation kann beispielsweise dafür genutzt werden, ein Fahrzeug autonom in dem in der Übersichtskarte dargestellten Bereich zu führen, auch wenn hierfür zuvor keine digitalen Kartendaten in dem Fahrzeug vorgelegen haben und eine Übertragung an das Fahrzeug mittels einer digitalen Kommunikationsschnittstelle nicht möglich bzw. vorgesehen ist. Auch erübrigt sich ein sonst erforderliches Datenmanagement und Update der digitalen Kartendaten. Weiterhin kann auf diese Weise die Datenmenge im Fahrzeug minimiert werden, da statt dem permanenten Vorhalten digitaler Kartendaten für eine Vielzahl beliebiger, ggfs. von dem Fahrzeug nie aufgesuchter Örtlichkeiten nur zeitweilig diejenigen Informationen erfasst und genutzt werden, die gerade benötigen werden.

Ferner liegt in dem Fahrzeug neben der aus den erfassten Bilddaten erzeugten digitale Karte zusätzlich eine weitere digitale Karte für den selben räumlichen Bereich vor, wobei die beiden digitalen Karten gemeinsam ausgewertet werden. Es werden räumliche Bereiche mit Widersprüchen zwischen den beiden digitalen Karten ermittelt. Die ermittelten Bereiche werden gemieden oder angefahren und mit einer Fahrzeugsensorik inspiziert. Dieser redundante Ansatz hat außerdem den Vorteil einer höheren Robustheit, da eine der beiden Kartenquellen ausfallen kann, ohne damit das Gesamtsysteme zu beeinträchtigen. Ferner können auf diese Weise Widersprüche zwischen den beiden digitalen Karten und damit potentiell problematische bzw. gefährliche Situationen frühzeitig erkannt und gegebenenfalls behoben werden.

Vorzugsweise erfolgt hierbei zur Erkennung der Übersichtskarte in den erfassten Bilddaten eine Auswertung einer in der Übersichtskarte enthaltenen Markierung. Dieses vereinfacht eine sichere Erkennung der Übersichtskarte beispielsweise wenn unterschiedliche Formate oder Ausgestaltungen für Übersichtskarten verwendet werden oder ein Teil einer Übersichtskarte verdeckt ist und damit nicht von der Kamera erfasst werden kann.

Ebenso enthält die Übersichtskarte vorteilhafterweise eine Information über den Standort der Übersichtskarte und/oder des Fahrzeugs bei Erfassung der Übersichtskarte, die erfasst und ausgewertet wird und bei der Transformation der Bilddaten in die navigierbare digitale Karte verwendet wird. Den eigenen Karten-Standort kann das Fahrzeug nutzen, um sein Lokalisierungssystem damit zu initialisieren und damit einen Einstiegspunkt in die digitalisierte Karte zu schaffen.

Weiterhin kann die Übersichtskarte vorteilhafterweise eine Information über einen Kartenmaßstab enthalten, die erfasst und ausgewertet wird und bei der Transformation der Bilddaten in die navigierbare digitale Karte verwendet wird. Dies ist insbesondere von Vorteil, wenn Übersichtskarten mit unterschiedlichen Maßstäben zum Einsatz kommen, beispielsweise aufgrund unterschiedlicher Größe der räumlich erfassten Bereiche.

Gemäß einer Ausführungsform der Erfindung enthält die Übersichtskarte einen Überblick über einen Parkraum mit einer Vielzahl von Parkplätzen, insbesondere über ein Parkhaus mit Parkplätzen auf einer oder mehreren Parkebenen. Damit können beispielsweise auch in Parkhäusern Leitinformationen generiert werden, obwohl für diese kein digitales Kartenmaterial im Fahrzeug von ist. Die Leitinformation kann dann beispielsweise eine Fahrtroute in einem Parkhaus angeben, mittels der ein Parkpilot einen ab Einfahrt in das Parkhaus vollautomatischen Parkvorgang ausführen kann. Ebenso kann aber auch basierend auf der Leitinformation eine Fahrempfehlung zu einem freien Parkplatz an einen Fahrer des Fahrzeugs ausgegeben werden.

Vorzugsweise wird hierbei die Übersichtskarte bei einer Annäherung des Fahrzeugs an den Parkraum oder beim Einfahren des Fahrzeugs in den Parkraum erfasst. Auf diese Weise wird sichergestellt, dass die Leitinformationen rechtzeitig vor Befahren des Parkraumes vorliegen.

Weiterhin kann die Übersichtskarte vorteilhafterweise aus mehreren Teilkarten bestehen, wobei
- eine erste Teilkarte beim Einfahren des Fahrzeugs in den Parkraum erfasst wird;
- mittels der ersten Teilkarte das Fahrzeug zu einem Teilbereich des Parkraums geführt wird;
- beim Einfahren des Fahrzeugs in den Teilbereich des Parkraums eine zweite Teilkarte erfasst wird; und
- mittels der zweiten Teilkarte das Fahrzeug zu einem Parkplatz in dem Teilbereich des Parkraums oder zu einem weiteren Teilbereich des Parkraums geführt wird.

Insbesondere bei größeren Parkräumen wie mehreren miteinander verbundenen Parkflächen oder Parkhäusern oder Parkhäusern mit einer Vielzahl von Etagen können so die erforderlichen Informationen auf mehrere Karten verteilt werden.

Gemäß einer weiteren Ausführungsform der Erfindung ist die in dem Fahrzeug zusätzlich vorliegende weitere digitale Karte über eine digitale Kommunikationseinrichtung empfangen worden oder bereits in den ursprünglichen digitalen Kartendaten einer Navigationsanwendung enthalten.

Die Erfindung betrifft auch ein Assistenzsystem zur Durchführung des erfindungsgemäßen Verfahrens.

Weitere Merkmale der vorliegenden Erfindung werden aus der nachfolgenden Beschreibung und den Ansprüchen in Verbindung mit den Figuren ersichtlich.
- Fig. 1: zeigt ein Ablaufdiagramm eines erfindungsgemäßen Verfahrens;
- Fig. 2: zeigt schematisch eine Draufsicht eines sich einem Parkhaus annähernden Fahrzeugs, welches mit einer Fahrzeugkamera eine Übersichtskarte des Parkhauses erfasst; und
- Fig. 3: zeigt schematisch ein Beispiel für eine Übersichtskarte für ein Parkhaus.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

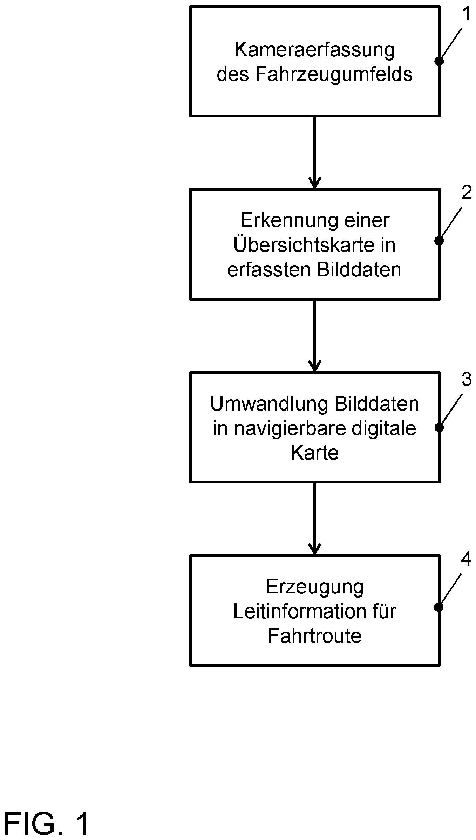

Figur 1 zeigt ein Ablaufdiagramm eines erfindungsgemäßen Verfahrens zur Nutzung einer digitalen Karte in einem Fahrzeug, wie es beispielsweise beim Befahren eines Parkraums angewandt werden kann. Auch wenn das Verfahren im Folgenden am Beispiel eines Parkhauses beschrieben wird, ist das Verfahren aber nicht auf das Befahren von Parkräumen beschränkt, sondern kann ebenso in anderen Bereichen verwendet werden, für die digitalen Kartendaten in dem Fahrzeug nicht oder nur unvollständig vorliegen.

In einem ersten Verfahrensschritt 1 wird das Fahrzeugumfeld mit einer oder mehreren Kameras des Fahrzeugs erfasst. Dieses kann beispielsweise mithilfe einer im Bereich des Rückspiegels montierten und nach vorne gerichteten Videokamera erfolgen.

Die von der Kamera erfassten Bilddaten werden in einem Verfahrensschritt 2 einer Bildverarbeitung zugeführt, die mit einem geeigneten Algorithmus die Bilddaten interpretiert. Hierbei kann beispielsweise nach einer Digitalisierung und gegebenenfalls weiterer Bildvorverarbeitung eine automatische Segmentierung erfolgen. Wird hierbei ein Bildbereich detektiert, der nach seiner äußeren Form einer visuell dargestellten Übersichtskarte entspricht, so wird durch weitere Auswertung der Bilddaten, beispielsweise bei einer weiteren Annäherung des Fahrzeugs an ein Parkhaus, dieser Bildbereich weiter ausgewertet bis dieser entweder eindeutig als visuell dargestellte Übersichtskarte erkannt wird oder aber als Falscherkennung verworfen wird.

Hierfür kann insbesondere die innere Struktur des Bildbereichs ausgewertet werden. So kann beispielsweise überprüft werden, ob der Bildbereich eine abstrahierte Abbildung von räumlichen Gegebenheiten, wie sie für ein Parkhaus typisch sind, und/oder eine vordefinierte Markierung, welche den Aushang als einen Übersichtsplan für ein Parkhaus ausweist, enthält. Auf diese Weise können Fahrzeuge bei Parkräumen, die über eine "analoge", beispielsweise am Einfahrtsbereich ausgehängte Übersichtskarte verfügen, beim Einfahren in den Parkraum diese Übersichtskarte erfassen und weiterverarbeiten. Die Erfassung und Verarbeitung der Bilddaten kann hierbei permanent erfolgen, oder aber auch erst aktiviert werden, wenn ein Navigationssystem des Fahrzeugs eine Annäherung des Fahrzeugs an ein Parkhaus vermeldet.

In einem Verfahrensschritt 3 werden dann die Bilddaten der erkannten Übersichtskarte in eine navigierbare digitale Karte transformiert. Die Karte kann hierfür sowohl die räumlichen Gegebenheiten des Parkhauses als auch den eigenen Karten-Standort enthalten. Die räumlichen Gegebenheiten des Parkhauses können hierbei beispielsweise die Ein- und Ausfahrt, die Rampen zwischen den einzelnen Etagen, die Fahrgassen und Anordnung der einzelnen Parkbuchten und Stellplätze oder Gefahrenstellen widerspiegeln. Ebenso können gegebenenfalls auch Hinweise auf besondere Höhen- und Befahrungsbeschränkungen oder spezielle Parkplätze, wie beispielsweise Behindertenparkplätze, Frauenparkplätze, Mutter-Kind-Parkplätze, oder auch auf Ausgänge, Treppen, und Aufzüge für die Fahrzeuginsassen enthalten sein. Den eigenen Karten-Standort kann das Fahrzeug nutzen, um sein Lokalisierungssystem damit zu initialisieren und damit einen Einstiegspunkt in die digitalisierte Karte zu schaffen.

Weiterhin kann die Übersichtskarte eine Information über den Maßstab enthalten, der vom Fahrzeug verarbeitet wird, um eine Transformation der Bild-Karte in eine navigierbare Karte durchzuführen. Der Maßstab kann hierbei in Klarschrift, z.B. als "1:500", dargestellt sein und dann mittels eines OCR-Klarschrift-Lesealgorithmus umgewandelt und bei der Transformation verwendet werden, oder auch in kodierter Form, z. B. in Form von hierfür vordefinierten QR-Codes, in der Übersichtskarte enthalten sein. Auf die Angabe eines Maßstabs kann jedoch verzichtet werden, wenn durch verbindliche Vereinbarungen zwischen den Parkhausbetreibern für die Übersichtskarten immer der gleiche Maßstab verwendet wird und eine Information hierüber dem Fahrzeug zur Verfügung steht.

Die Übersichtskarte kann beispielsweise als Metallschild ausgestaltet sein, auf der die genannten Informationen permanent aufgedruckt sind. Ebenso kann hierfür aber auch eine elektronische Anzeige, beispielsweise ein LCD-Display, verwendet werden. Die Verwendung einer elektronischen Anzeige hat hierbei den Vorteil, dass diese auch bei Dunkelheit ohne zusätzliche Beleuchtung gut erfasst werden kann und auch eine Anpassung der angezeigten Informationen, beispielsweise bei einer temporären Sperrung von Teilbereichen des Parkhauses, leicht erfolgen kann.

Die Übersichtskarte kann hierbei in Form einer Gesamtkarte für das Parkhaus Informationen zu den verschiedenen Ebenen des Parkhauses geben, beispielsweise im Einfahrtsbereich des Parkhauses. Die Übersichtskarte kann aber auch in mehrere Teilkarten unterteilt sein, die jeweils Informationen zu einer der Parkebenen geben. Diese mehreren Teilkarten können gemeinsam im Einfahrtsbereich angebracht sein und/oder aber auch bei den Einfahrten für die jeweiligen Etagen als eine Etagen-Karte vorgesehen sein. Ebenso können neben einer groben Übersichtskarte, die lediglich die verschiedenen Parkgassen ohne Details zu den einzelnen Stellplätzen enthält, jeweils separate Parkgassen-Karten für die einzelnen Parkgassen vorgesehen sein, welche die einzelnen Stellplätze der jeweiligen Parkgasse, gegebenenfalls zusammen mit der Bezeichnung der einzelnen Stellplätze, angeben.

In einem Verfahrensschritt 4 wird dann unter Verwendung der generierten navigierbaren digitale Karte eine Leitinformation für eine Fahrtroute in dem in der Übersichtskarte dargestellten räumlichen Bereich erzeugt. Diese kann das Fahrzeug dann nutzen, um seine autonome Fahrt durch das Parkhaus zu planen und durchzuführen. Dieses kann auch sukzessive erfolgen, in dem das Fahrzeug zunächst eine wie oben beschriebene, grobe Übersichtskarte nutzt, um zu einer Parkgasse zu fahren und dann die Parkgassen-Karte dieser Parkgasse auswertet, um einen vorgesehenen Parkplatz zu finden.

Hierbei kann es auch vorgesehen sein, die korrekte Erkennung einer Übersichtskarte dem Fahrer zu signalisieren, beispielsweise durch eine entsprechende visuelle Anzeige im Kombiinstrument oder auf dem Bildschirm des Navigationsgerätes/Infotainmentsystems und so dem Fahrer zu vermitteln, dass die für die autonome Fahrt im Parkhaus erforderlichen Informationen vorliegen und die Bahnplanung hierfür erfolgen kann.

Ebenso kann die generierte Leitinformation aber in einem manuellen Fahrmodus auch an einen parkplatzsuchenden Fahrer des Fahrzeugs ausgegeben werden. Beispielsweise kann eine Anzeige der Leitinformation auf einer an ein Assistenzsystem angeschlossenen Anzeigevorrichtung erfolgen, insbesondere im Rahmen einer Navigationsanzeige, die auf einem Display im Bereich des Armaturenbretts oder der Mittelkonsole, einem Kombiinstrument oder einem Head-Up-Display des Fahrzeugs dargestellt werden kann. Stattdessen oder zusätzlich kann auch eine Sprachausgabe der Leitinformation erfolgen.

Sollte dem Fahrzeug neben der aus den erfassten Bilddaten erzeugten digitale Karte bereits eine weitere digitale Karte für den gleichen räumlichen Bereich per IT-Schnittstelle zur Verfügung stehen, so können diese beiden digitalen Karten gemeinsam ausgewertet werden. Hierbei kann es vorkommen, dass Widersprüche zwischen den beiden digitalen Karten bestehen. Das Fahrzeug kann dann, soweit möglich, Bereiche mit Widersprüchen in den digitalen Karten meiden, oder die betroffenen Stellen befahren, um per Fahrzeugsensorik diese Stellen zu inspizieren bzw. vermessen und damit die Auflösung des Widerspruchs zu unterstützen. Das Fahrzeug kann seine Vermessungsergebnisse zum Auflösen von Widersprüchen auch anderen Fahrzeugen oder einer vorhandenen IT-Infrastruktur, z.B. per Car2x, zur Verfügung stellen. Damit kann das Fahrzeug dazu beitragen, Fehler in der Datenübertragung zu identifizieren oder Verschmutzung oder Vandalismus an den ausgehängten Karten zu erkennen.

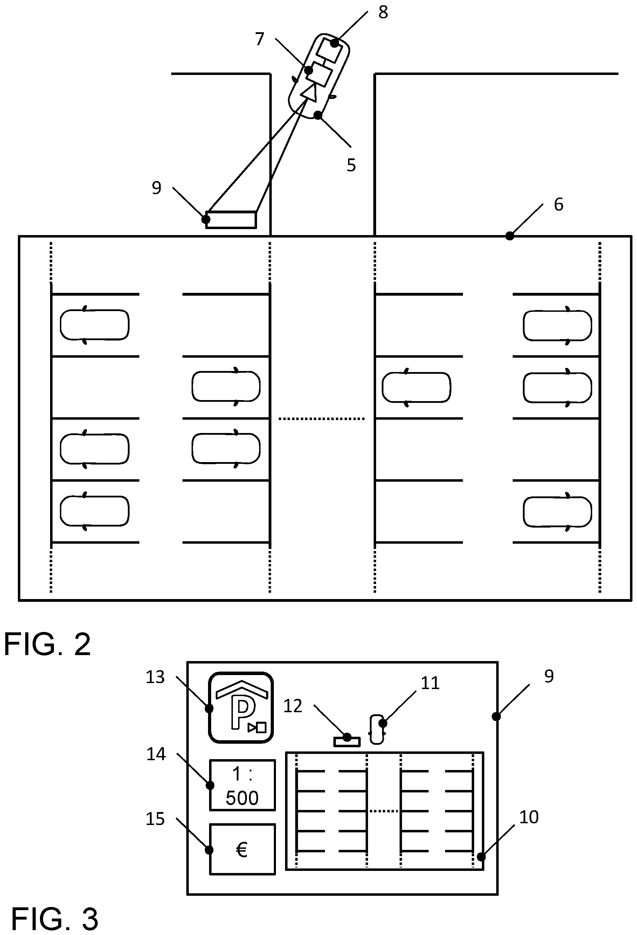

Figur 2 zeigt schematisch eine Draufsicht eines Fahrzeugs 5, dass sich einem Parkhaus 6, in dem einige der Parkbuchten sowie einige diese Parkbuchten belegende Fremdfahrzeuge schematisch angedeutet sind, annähert. Das Fahrzeug weist eine Fahrzeugkamera 7 auf, die das Fahrzeugumfeld vor dem Fahrzeug erfasst. Die erfassten Bild- bzw. Videodaten werden, beispielsweise über einen digitalen Datenbus im Fahrzeug, einer Auswerte- und Steuereinheit 8 zugeführt, welche die Bilddaten daraufhin ausgewertet, ob sie eine Übersichtskarte 9 des Parkhauses wiedergeben. Durch geeignete Bildverarbeitungsverfahren kann dann ein Bildobjekt als eine solche Übersichtskarte erkannt werden, beispielsweise durch Auswertung von auf der Übersichtskarte dargestellten Markierungen, und dann beispielsweise für die Generierung von Leitinformationen genutzt werden.

Zusätzlich zu der Fahrzeugkamera 7 und der Auswerte- und Steuereinheit 8 kann das Fahrzeug weitere, nicht dargestellte Komponenten enthalten. So kann eine Vorrichtung zur Steuerung eines autonomen oder auch teilautonomen Fahrbetriebs unter Verwendung der Übersichtskarte eine von dem Fahrzeug zu fahrende Trajektorie in dem Parkhaus ermitteln und das Fahrzeug entsprechend ansteuern. Hierbei kann die Bestimmung der Trajektorie, insbesondere im Einfahrtsbereich, zusammen mit einem Navigationssystem und unter Berücksichtigung von durch eine Fahrzeugsensorik bereitgestellter Informationen erfolgen. Weiterhin kann das Fahrzeug 5 einen Speicher zur Speicherung der aus der Übersichtskarte generierten digitalen Karte und eine Datenübertragungseinheit mit einer IT-Schnittstelle aufweisen.

Die Übersichtskarte 9 kann sich auch an anderen Positionen als in der Figur dargestellt befinden, wie zum Beispiel auch oberhalb der Einfahrt des Parkhauses. Ebenso kann diese auch anders ausgerichtet und auch von anderen Kameras des Fahrzeugs erfasst werden. Muss beispielsweise das Fahrzeug beim Einfahren in das Parkhaus stoppen, um einen Parkschein für das Parkhaus bei einem neben dem Fahrzeug befindlichen Parkscheinautomaten durch das Autofenster heraus zu lösen, so kann die Übersichtskarte auch in der Nähe des Parkscheinautomaten angebracht werden und gegebenenfalls auch von einer seitlich ausgerichteten Kamera erfasst werden. Dieses hat den Vorteil, dass der Abstand zwischen der Kamera und der Übersichtskarte geringgehalten werden kann und keine bewegten Bilder ausgewertet werden müssen, da das Fahrzeug zum Stillstand gebracht worden ist. Damit kann auch eine besonders detailreiche Übersichtskarte mit der Kamera scharf erfasst werden.

Figur 3 zeigt schematisch ein Beispiel für eine solche Übersichtskarte 9 für ein Parkhaus. Die Übersichtskarte weist insbesondere einen Überblick 10 über räumliche Gegebenheiten des Parkhauses sowie Informationen 11, 12 über den Standort der Übersichtskarte sowie des Fahrzeugs bei Erfassung der Übersichtskarte auf, ebenso kann aber auch nur eine Information für eine der beiden Standorte angegeben werden. Weiterhin kann der Standort der Übersichtskarte bzw. der Fahrzeugstandort statt durch ein entsprechend positioniertes Symbol beispielsweise auch durch Koordinaten angegeben werden.

Weiterhin ist zur Erkennung der Übersichtskarte in den erfassten Bilddaten eine Markierung 13 zur Kennzeichnung der Übersichtskarte dargestellt und eine Information 14 über den Kartenmaßstab enthalten. Schließlich können auch weitere Informationen, wie beispielsweise eine Angabe 15 über die Höhe des Parkpreises oder, bei Verwendung einer elektronischen Anzeige, Informationen zum Füllstand des Parkhauses, angegeben werden.

Statt in Klarschrift, können die auf der Übersichtskarte angegebenen Informationen auch in einer kodierten Form wiedergegeben werden. Dieses hat zwar den Nachteil, dass die Informationen von dem Fahrzeuginsassen nicht ohne weiteres verstanden werden können, bietet aber aufgrund der Kodierung die Möglichkeit, durch geeignete Komprimierungsverfahren eine deutlich höhere Datenmenge mittels der Kameraerfassung an das Fahrzeug zu übermitteln und dort nach geeigneter Dekodierung zu verwenden.

### Bezugszeichenliste

- 1: erster Verfahrensschritt
- 2: zweiter Verfahrensschritt
- 3: dritter Verfahrensschritt
- 4: vierter Verfahrensschritt
- 5: Fahrzeug
- 6: Parkhaus
- 7: Kamera
- 8: Auswerte- und Steuereinheit
- 9: Übersichtskarte
- 10: Überblick über räumliche Gegebenheiten des Parkhauses
- 11: Fahrzeugsymbol
- 12: Symbol für Übersichtskarte
- 13: Parkhausmarkierung
- 14: Information über Kartenmaßstab
- 15: Informationen zum Parkpreis

## Patentansprüche

1. Verfahren zur Nutzung einer digitalen Karte in einem Fahrzeug, wobei
- Bilddaten des Fahrzeugumfelds mit einer oder mehreren Kameras (7) des Fahrzeugs (5) erfasst (1) werden;
- die erfassten Bilddaten zur Erkennung einer visuell dargestellten Übersichtskarte (9), die eine abstrahierte Abbildung von räumlichen Gegebenheiten in der Nähe der Übersichtskarte enthält, verarbeitet (2) werden;
- die Bilddaten einer erkannten Übersichtskarte (9) in eine navigierbare digitale Karte transformiert (3) werden;
- unter Verwendung der digitalen Karte eine Leitinformation für eine Fahrtroute in dem in der Übersichtskarte dargestellten räumlichen Bereich erzeugt (4) wird; und wobei
- in dem Fahrzeug neben der aus den erfassten Bilddaten erzeugten digitale Karte zusätzlich eine weitere digitale Karte für den selben räumlichen Bereich vorliegt und die beiden digitalen Karten gemeinsam ausgewertet werden;
- räumliche Bereiche mit Widersprüchen zwischen den beiden digitalen Karten ermittelt werden; und
- die ermittelten Bereiche gemieden werden oder angefahren und mit einer Fahrzeugsensorik inspiziert werden.

2. Verfahren nach Anspruch 1, wobei zur Erkennung der Übersichtskarte in den erfassten Bilddaten eine Auswertung einer in der Übersichtskarte enthaltenen Markierung (13) erfolgt.

3. Verfahren nach Anspruch 1 oder 2, wobei die Übersichtskarte eine Information (11, 12) über den Standort der Übersichtskarte und/oder des Fahrzeugs bei Erfassung der Übersichtskarte enthält, die erfasst und ausgewertet wird und bei der Transformation der Bilddaten in die navigierbare digitale Karte verwendet wird.

4. Verfahren nach einem der vorhergehenden Ansprüche, wobei die Übersichtskarte eine Information (14) über einen Kartenmaßstab enthält, die erfasst und ausgewertet wird und bei der Transformation der Bilddaten in die navigierbare digitale Karte verwendet wird.

5. Verfahren nach einem der vorhergehenden Ansprüche, wobei die Übersichtskarte einen Überblick (10) über einen Parkraum mit einer Vielzahl von Parkplätzen, insbesondere über ein Parkhaus mit Parkplätzen auf einer oder mehreren Parkebenen, enthält.

6. Verfahren nach Anspruch 5, wobei die Übersichtskarte bei einer Annäherung des Fahrzeugs an den Parkraum oder beim Einfahren des Fahrzeugs in den Parkraum erfasst (1) wird.

7. Verfahren nach Anspruch 5, wobei die Übersichtskarte aus mehreren Teilkarten besteht und wobei
- eine erste Teilkarte beim Einfahren des Fahrzeugs in den Parkraum erfasst wird;
- mittels der ersten Teilkarte das Fahrzeug zu einem Teilbereich des Parkraums geführt wird;
- beim Einfahren des Fahrzeugs in den Teilbereich des Parkraums eine zweite Teilkarte erfasst wird; und
- mittels der zweiten Teilkarte das Fahrzeug zu einem Parkplatz in dem Teilbereich des Parkraums oder zu einem weiteren Teilbereich des Parkraums geführt wird.

8. Verfahren nach einem der vorhergehenden Ansprüche, wobei
- die in dem Fahrzeug zusätzlich vorliegende weitere digitale Karte über eine digitale Kommunikationseinrichtung empfangen worden ist oder bereits in den ursprünglichen digitalen Kartendaten einer Navigationsanwendung enthalten ist.

9. Assistenzsystem zur Durchführung eines Verfahrens nach einem der vorhergehenden Ansprüche.

## Claims

1. Method for using a digital map in a vehicle, wherein
- image data of the vehicle surroundings are acquired (1) using one or more cameras (7) of the vehicle (5);
- the acquired image data are processed (2) to identify a visually represented overview map (9) containing an abstracted representation of spatial conditions in the vicinity of the overview map;
- the image data of an identified overview map (9) are transformed (3) into a navigable digital map;
- guidance information for a travel route in the spatial region represented in the overview map is generated (4) using the digital map; and wherein
- in addition to the digital map generated from the acquired image data, there is also an additional digital map in the vehicle for the same spatial region, and the two digital maps are evaluated together;
- spatial regions with contradictions between the two digital maps are identified; and
- the identified regions are avoided or are approached and inspected using vehicle sensors.

2. Method according to claim 1, wherein, in order to identify the overview map in the acquired image data, a marking (13) contained in the overview map is evaluated.

3. Method according to claim 1 or 2, wherein the overview map contains information (11, 12) about the location of the overview map and/or the location of the vehicle when the overview map is acquired, which information is acquired and evaluated and is used during the transformation of the image data into the navigable digital map.

4. Method according to any of the preceding claims, wherein the overview map contains information (14) about a map scale, which information is acquired and evaluated and is used during the transformation of the image data into the navigable digital map.

5. Method according to any of the preceding claims, wherein the overview map contains an overview (10) of a parking area comprising a plurality of parking spaces, in particular of a parking garage comprising parking spaces on one or more parking levels.

6. Method according to claim 5, wherein the overview map is acquired (1) when the vehicle approaches the parking area or when the vehicle enters the parking area.

7. Method according to claim 5, wherein the overview map consists of a plurality of partial maps and wherein
- a first partial map is acquired when the vehicle enters the parking area;
- the vehicle is guided to a portion of the parking area by means of the first partial map;
- when the vehicle enters the portion of the parking area, a second partial map is acquired; and
- the vehicle is guided to a parking space in the portion of the parking area or to another portion of the parking area by means of the second partial map.

8. Method according to any of the preceding claims, wherein
- the additional digital map also present in the vehicle has been received via a digital communication device or is already contained in the original digital map data of a navigation application.

9. Assistance system for carrying out a method according to any of the preceding claims.

## Revendications

1. Procédé pour l'utilisation d'une carte numérique dans un véhicule, dans lequel
- des données d'images de l'environnement du véhicule sont capturées (1) par une ou plusieurs caméras (7) du véhicule (5) ;
- les données d'images capturées sont traitées (2) pour reconnaître une carte générale (9) représentée visuellement qui contient une représentation abstraite de conditions spatiales à proximité de la carte générale ;
- les données d'images d'une carte générale (9) reconnue sont transformées (3) en une carte numérique navigable ;
- en utilisant la carte numérique, des information de guidage pour un itinéraire dans la zone spatiale représentée dans la carte générale sont générées (4) ; et dans lequel
- dans le véhicule, en plus de la carte numérique générée à partir des données d'images capturées, une autre carte numérique est en outre présente pour la même zone spatiale et les deux cartes numériques sont évaluées ensemble ;
- des zones spatiales comportant des contradictions entre les deux cartes numériques sont déterminées ; et
- les zones déterminées sont évitées ou approchées et inspectées à l'aide d'un système de capteurs de véhicule.

2. Procédé selon la revendication 1, dans lequel, pour la reconnaissance de la carte générale dans les données d'images capturées, une évaluation d'un marquage (13) contenu dans la carte générale est effectuée.

3. Procédé selon la revendication 1 ou 2, dans lequel la carte générale contient des informations (11, 12) concernant l'emplacement de la carte générale et/ou du véhicule lors de l'acquisition de la carte générale, lesquelles informations sont acquises et évaluées et utilisées lors de la transformation des données d'images en carte numérique navigable.

4. Procédé selon l'une des revendications précédentes, dans lequel la carte générale contient des informations (14) concernant une échelle de carte qui sont acquises et évaluées et utilisées lors de la transformation des données d'images en carte numérique navigable.

5. Procédé selon l'une des revendications précédentes, dans lequel la carte générale contient un aperçu (10) d'un espace de stationnement comportant une pluralité de places de stationnement, en particulier d'un parking à étages comportant des places de stationnement sur un ou plusieurs niveaux de stationnement.

6. Procédé selon la revendication 5, dans lequel la carte générale est acquise (1) lorsque le véhicule s'approche de l'espace de stationnement ou lorsque le véhicule pénètre dans l'espace de stationnement.

7. Procédé selon la revendication 5, dans lequel la carte générale est constituée de plusieurs cartes partielles et dans lequel
- une première carte partielle est acquise lorsque le véhicule pénètre dans l'espace de stationnement ;
- au moyen de la première carte partielle, le véhicule est guidé vers une zone partielle de l'espace de stationnement ;
- une seconde carte partielle est acquise lorsque le véhicule pénètre dans la zone partielle de l'espace de stationnement ; et
- au moyen de la seconde carte partielle, le véhicule est guidé vers une place de stationnement dans la zone partielle de l'espace de stationnement ou vers une autre zone partielle de l'espace de stationnement.

8. Procédé selon l'une des revendications précédentes, dans lequel
- l'autre carte numérique en outre présente dans le véhicule a été reçue par l'intermédiaire d'un dispositif de communication numérique ou est déjà contenue dans les données cartographiques numériques d'origine d'une application de navigation.

9. Système d'assistance pour la réalisation d'un procédé selon l'une des revendications précédentes.
